# EUROPÄISCHE PATENTSCHRIFT

(11) **EP 1 417 442 B1**
(45) Veröffentlichungstag und Bekanntmachung des Hinweises auf die Patenterteilung: **05.04.2006**
(21) Anmeldenummer: 02758436.6
(22) Anmeldetag: 06.08.2002
(51) Int. Cl.: F24F 6/14, F28D 5/00, F24F 5/00

(54) **VORRICHTUNG UND VERFAHREN ZUR RÜCKKÜHLUNG VON KÜHLMITTELN ODER RÜCKKÜHLMEDIEN ODER ZUR KÄLTEGEWINNUNG**
DEVICE AND METHOD FOR RECOOLING COOLANTS OR RECOOLING MEDIA, OR FOR OBTAINING COLD FROM AN AIR CURRENT
DISPOSITIF ET PROCEDE POUR LE RECYCLAGE DE REFRIGERANTS OU DE MILIEUX DE RECYCLAGE OU POUR LA PRODUCTION DE FROID

(30) Priorität: 16.08.2001 DE 10140279
(43) Veröffentlichungstag der Anmeldung: 12.05.2004
(60) Teilanmeldung: 05017830.0
(73) Patentinhaber: Michelbach, Ludwig, 90513 Zirndorf (DE)
(72) Erfinder: Michelbach, Ludwig, 90513 Zirndorf (DE)
(74) Vertreter: Zech, Stefan Markus
(86) Internationale Anmeldenummer: PCT/EP2002/008760
(87) Internationale Veröffentlichungsnummer: WO 2003/016789

(56) Entgegenhaltungen:
- WO-A-00/16022
- GB-A- 2 318 180
- US-A- 4 494 596

## Beschreibung

Die Erfindung betrifft eine Vorrichtung und ein Verfahren zur Rückkühlung von Kühlmitteln oder Rückkühlmedien oder zur Kältegewinnung aus einem Luftstrom gemäß dem Oberbegriff von Patentanspruch 1 bzw. 18.

Anlagen zur Rückkühlung bzw. Kältegewinnung werden beispielsweise zur Lebensmittelkühlung, zu Gefrierprozessen, zur Klimatisierung von Gebäuden und in der chemischen Industrie benötigt. Es gibt zahlreiche Verfahrensprinzipien, bei denen Kälte von einem höheren Temperaturniveau auf ein niedrigeres übertragen wird. Dazu ist die Zufuhr von Energie erforderlich, da Kälte von selbst ausschließlich von dem niedrigeren Temperaturniveau auf das höhere übertragen wird. Es sind die unterschiedlichsten Arten von Anlagen bekannt, in denen entweder offene oder geschlossene thermodynamische Kreisprozesse ablaufen.

Zur Rückkühlung bzw. Kältegewinnung aus einem Luftstrom werden beispielsweise Kühltürme verwendet. Für zahlreiche Anwendungen kommen Kühltürme in den unterschiedlichsten Größen zum Einsatz. Beispielsweise in Kraftwerken werden Kühltürme zum Abkühlen des Abwassers verwendet. Auf klimatisierten Gebäuden werden Kühltürme dazu verwendet, aus der Abluft Kälte rückzugewinnen. Solche Kühltürme arbeiten sehr zuverlässig, aber deren Energiebilanz ist nicht besonders günstig. Für einen funktionsfähigen Kühlturm für ein Gebäude ist eine gewisse Mindestgröße erforderlich, die die Ästhetik des Gebäudes oftmals zerstört. Ein Kühlturm benötigt stets ein verhältnismäßig großes Volumen. Außerdem ist erforderlich, dass sich der Luftstrom stets in vertikaler Richtung erstreckt.

Aus US 4,494,596 ist eine Vorrichtung zur Konditionierung eines Luftstroms bekannt. Diese Vorrichtung weist Sprühdüsen zur Befeuchtung des Luftstroms auf. Diesen ist ein Wärmetauscher nachgeschaltet. Ein Ventilator erzeugt den Luftstrom durch die Vorrichtung.

Es ist Aufgabe der Erfindung, eine Vorrichtung und ein Verfahren zur Rückkühlung von Kühlmitteln oder Rückkühlmedien oder zur Kältegewinnung aus einem Luftstrom bereitzustellen, bei der die Richtung des Luftstroms beliebig ausgerichtet sein kann und deren Energiebilanz gegenüber einem Kühlturm verbessert ist.

Diese Aufgabe wird vorrichtungsmäßig durch den Gegenstand gemäß Patentanspruch 1 und verfahrensmäßig durch den Gegenstand gemäß Patentanspruch 18 gelöst.

Die erfindungsgemäße Vorrichtung zur Rückkühlung von Kühlmitteln oder Rückkühlmedien oder zur Kältegewinnung aus einem Luftstrom weist folgende Merkmale auf:
- wenigstens eine Luftbefeuchtungseinrichtung zur Befeuchtung des Luftstroms;
- wenigstens einen Wärmetauscher, welcher der Luftbefeuchtungseinrichtung nachgeschaltet ist und zwischen dem Luftstrom und einem Kühlmittelkreislauf wechselwirkt;
- eine Gebläseeinrichtung zur Beförderung des Luftstroms; und
- die Luftbefeuchtungseinrichtung weist eine Regelungseinrichtung zur Regulierung der Befeuchtung des Luftstroms auf, so dass im Wesentlichen kein Kondenswasser in der Vorrichtung verbleibt.

Durch die insbesondere durch Feinstvernebelung befeuchtete Luft wird der Wirkungsgrad der Anlage erhöht. Aufgrund der Verdunstungsenthalpie der Befeuchtungsfluidpartikel, insbesondere der Wasserpartikel im Luftstrom wird zusätzliche Wärmeenergie benötigt, die eine Erhöhung der Kälterückgewinnung bewirkt. Ein im nachgeschalteten Wärmetauscher sich befindendes Kühlmittel wird dadurch entsprechend stärker abgekühlt. Die ultrakleinen Wasserpartikel (Aerosole) haben weiter den Vorteil, dass sie vom Luftstrom tief in den Wärmetauscher mitgerissen werden. Da die Vorrichtung ein Gebläse aufweist, kann die Strömungsrichtung des Luftstroms beliebig, insbesondere also nicht nur vertikal, sondern auch horizontal ausgerichtet sein. Als Befeuchtungsfluid wird zweckmäßigerweise Wasser eingesetzt. Die Erfindung ist jedoch nicht auf die Verwendung von Wasser als Befeuchtungsfluid beschränkt. Vielmehr ist die Verwendung anderer geeigneter Befeuchtungsfluide nicht ausgeschlossen.

Vorzugsweise ist vorgesehen, dass die Vorrichtung einen nur eingangs- und ausgangsseitigen offenen, ansonsten geschlossenen Kanal aufweist, in dem die Luftbefeuchtungseinrichtung, der Wärmetauscher und die Gebläseeinrichtung angeordnet sind. Der Kanal ermöglicht, dass die befeuchtete Luft vollständig durch den Wärmetauscher geblasen wird. Der geschlossene Kanal trägt somit zur Optimierung der Energiebilanz bei.

Weiterhin kann vorgesehen sein, dass die Gebläseeinrichtung dem Wärmetauscher nachgeschaltet ist. Dadurch hat die Gebläseeinrichtung eine Saugwirkung, was insbesondere strömungstechnisch vorteilhaft ist. Darüber hinaus wirkt sich die Abluft der Gebläseeinrichtung dann nicht negativ auf die beabsichtigte Kühlwirkung aus.

Insbesondere ist vorgesehen, dass die Gebläseeinrichtung eine Mehrzahl paralleler und/oder serieller Ventilatoren aufweist. Durch die Mehrzahl der Ventilatoren wird die Ausgestaltungsmöglichkeit der Vorrichtung und die Regelungsmöglichkeit des Luftstromes wesentlich erweitert. Eine Mehrzahl kleinerer Ventilatoren ist wirtschaftlicher als ein einziger, größerer Ventilator, insbesondere wenn bei Ausfall eines Ventilators dieser ersetzt werden muss. Außerdem sind mehrere Ventilatoren getrennt ansteuerbar, wodurch die Regelungsmöglichkeiten für den Luftstrom erweitert werden.

Für eine bevorzugte Ausführungsform der Luftbefeuchtungseinrichtung ist vorgesehen, dass die Luftbefeuchtungseinrichtung ein Druckwasser-Befeuchter ist, der eine Vielzahl Düsen aufweist, die im Luftstrom, bevorzugtermaßen in Luftströmungsrichtung ausgerichtet, angeordnet sind und das Wasser unter hohem Druck, vorzugsweise im Bereich zwischen 0 und 200 bar, ausbringen. Damit lässt sich erreichen, dass der Luftstrom mit besonders kleinen Wassertröpfchen befeuchtet wird. Es wird ein Sprühnebel (Aerosol) erzeugt, bei dem die Gesamtoberfläche der Wassertröpfchen besonders groß ist. Dies hat eine schnelle und intensive Verdunstung zur Folge. Die Verdunstungsenthalpie der Wassertröpfchen kann genutzt werden, um das Kühlmittel im Sekundärkreis des Wärmetauschers noch weiter abzukühlen. Durch diese gezielte Luftbefeuchtung lässt sich die Kälterückgewinnung und damit der Wirkungsgrad der gesamten Anlage erhöhen.

Zur optimalen Nutzung der Anlage kann vorgesehen sein, dass die Ausbringungsmenge des Befeuchtungsfluids kontinuierlich einstellbar, insbesondere je nach erforderlicher Kühlleistung bzw. Sättigungszustand (auch Übersättigungszustand) des befeuchteten Luftstroms regelbar ist. Die Ausbringungsmenge des Befeuchtungsfluids ist über den Druck des Befeuchtungsfluids in der Luftbefeuchtungsvorrichtung oder über Durchflusssteuereinrichtungen wie beispielsweise Ventile steuer- bzw. regelbar. Vorzugsweise erfolgt eine Steuerung der Ausbringungsmenge des Befeuchtungsfluids zumindest bei kleinen Ausbringungsmengen zunächst über eine Veränderung des Fluiddrucks. Bei Erreichen eines bestimmten Fluiddrucks, beispielweise 80 bar, kann es sinnvoll sein, die Ausbringungsmenge des Befeuchtungsfluids über Durchflusssteuereinrichtungen zu regulieren. Für eine reine Druckregulierung oder die vorbeschriebene kombinierte Regulierung ist der Druck vorzugsweise zwischen 0 bar und 200 bar einstellbar. Vorzugsweise ist der Druck zwischen 20 bar und 120 bar einstellbar. Unter typischen Bedingungen wird der Druck der Luftbefeuchtungsanlage auf etwa 80 bar eingestellt.

Weiterhin ist vorgesehen, dass die Wassermenge bei der Luftbefeuchtungseinrichtung kontinuierlich einstellbar bzw. regelbar ist. Durch die vorgenannten Einstellmöglichkeiten lässt sich die Anlage einerseits an die Umgebungsbedingungen und andererseits an den Kältebedarf auch während des Betriebs der Anlage durch eine entsprechende Steuerung oder Regelung anpassen.

Vorzugsweise bewirkt die Luftbefeuchtungseinrichtung eine Feinstvernebelung des Luftstroms, wobei der Tröpfchendurchmesser bei der Mehrzahl der Tropfen weniger als 60 µm, vorzugsweise weniger als 30 µm beträgt. Mit dieser Tröpfchengröße ist eine besonders zügige Verdunstung gewährleistet.

Bei einer speziellen Ausführungsform der erfindungsgemäßen Vorrichtung ist vorgesehen, dass die Luftbefeuchtungseinrichtung gemäß dem deutschen Patent DE 41 10 550 C2 ausgebildet ist. Mit dieser patentierten Luftbefeuchtungseinrichtung lässt sich erreichen, dass die gesamte Menge des eingesprühten Wassers in feinst zerstäubter Form vorliegt.

Zur Vermeidung von Lärmbelästigung kann vorgesehen sein, dass der Luftbefeuchtungseinrichtung ein Schalldämpfer vorgeschaltet ist. Zusätzlich oder alternativ dazu kann vorgesehen sein, dass der Gebläseeinrichtung ein Schalldämpfer nachgeschaltet ist. Damit lässt sich der durch den Luftstrom verursachte Lärm bereits an der Quelle eindämmen. Das Erfordernis von Schallschutzeinrichtungen in den entsprechenden Gebäuden wird dadurch erheblich reduziert.

Weiterhin ist vorgesehen, dass der Kühlmittelkreislauf ein Kühlmittel aufweist. Dabei kann das Kühlmittel in Form eines Kältemittels oder eines flüssigen Rückkühlmediums vorliegen. Flüssigkeiten haben eine verhältnismäßig hohe spezifische Wärmekapazität, so dass der Wärmetransport im Kühlmittelkreislauf optimiert werden kann. Außerdem ist ein Flüssigkeitskreislauf konstruktiv verhältnismäßig einfach und damit kostengünstig zu realisieren.

Zur weiteren Optimierung des Kühlmittelkreislaufs kann vorgesehen sein, dass dem Rückkühlmedium Substanzen zugesetzt sind, deren Schmelzpunkt innerhalb des Betriebstemperaturintervalls des flüssigen Rückkühlmediums liegt. Auf diese Weise kann die Schmelzenthalpie dieser Substanzen genutzt werden, um den Wärmetransport im Kühlmittelkreislauf und damit die gesamte Kälterückgewinnung weiter zu optimieren.

Zur Regelung der Anlage ist weiterhin vorgesehen, dass die Drehzahl der Ventilatoren kontinuierlich einstellbar ist. Dadurch kann die gesamte Vorrichtung sowohl durch die Einstellung der Drehzahl der Ventilatoren als auch durch die Einstellung des Drucks in der Luftbefeuchtungseinrichtung geregelt werden. Je nach Ausführungsform wird entweder die Temperatur im Rücklauf des Rückkühlmediums oder der Druck des Kältemittels nach dem Verflüssiger gemessen. Falls dieser Messwert unter einem vorbestimmten Sollwert liegt, wird zunächst die Drehzahl der Ventilatoren kontinuierlich erhöht, bis entweder der vorbestammte Sollwert oder eine maximale Drehzahl der Ventilatoren erreicht wird. Sollte im letzteren Fall der Sollwert nicht erreicht worden sein, wird die Ausbringungsmenge in der Luftbefeuchtungsanlage durch Erhöhung des Fluiddrucks oder durch kontinuierliches oder diskontinuierliches Öffnen von Druckflusssteuereinrichtungen, insbesondere Ventilen erhöht. Bei Erreichen des Sollwerts kann zunächst die Drehzahl der Ventilatoren reduziert werden, um die akustische Belastung für die Umgebung so gering wie möglich zu halten.

Für das erfindungsgemäße Verfahren zur Kälterückgewinnung aus einem Luftstrom sind folgende Schritte vorgesehen sind:
- Bereitstellen eines Luftstroms aus einer Abluft eines klimatisierten Gebäudes oder aus der Umgebungsluft;
- Befeuchten des Luftstroms durch Zugabe von feinst vernebeltem Sprühwasser;
- Erwärmen des Luftstroms bei Erhöhung der absoluten Feuchtigkeit und gleichzeitiger Herabsetzung der relativen Feuchtigkeit, wobei die erforderliche Energie aus einem Kühlmittelkreislauf entnommen wird;
- Abführen des Luftstroms an die Umgebung;
- Regulierung und Führung des Befeuchtens des Luftstroms derart, dass im Wesentlichen kein Niederschlag entsteht.

Durch das Befeuchten des Luftstroms mit sehr kleinen Wassertröpfchen lässt sich der Wirkungsgrad für die Kälterückgewinnung wesentlich erhöhen. Bei der Erwärmung des Luftstroms werden die Wassertröpfchen verdunstet, so dass insbesondere wegen der Verdunstungsenthalpie der Wassertröpfchen zusätzliche Wärmeenergie benötigt wird. Diese Wärmeenergie wird dem Kühlmittel im Kühlmittelkreislauf entzogen, so dass das Kühlmittel zusätzlich abgekühlt wird. Das erfindungsgemäße Verfahren stellt somit ein verbessertes Verfahren zur Kälterückgewinnung aus einem Luftstrom dar.

Für den Luftstrom kann beispielsweise die Abluft eines klimatisierten Gebäudes verwendet werden. Ebenso ist es möglich, die Umgebungsluft zu verwenden. Durch das Befeuchten des Luftstroms wird dessen Temperatur zunächst gesenkt. Anschließend wird der Luftstrom im Wärmetauscher wieder erwärmt, wobei die noch verbliebenen Wassertröpfchen verdunsten. Aufgrund der Verdunstungsenthalpie wird dem Kühlmittel zusätzliche Wärmeenergie entzogen, so dass die Kälterückgewinnung und der Wirkungsgrad der gesamten Anlage verbessert wird.

Weitere Merkmale, Vorteile und besondere Ausgestaltungen der Erfindung sind Gegenstand der Unteransprüche.

Bevorzugte Ausführungsformen der Erfindung werden nachstehend anhand der beigefügten Zeichnungen näher erläutert.

Es zeigen
- Fig. 1: ein Blockschaltbild einer ersten Ausführungsform der erfindungsgemäßen Vorrichtung mit weiteren pcripheren Komponenten;
- Fig. 2: eine Perspektivansicht der ersten Ausführungsform der erfindungsgemäßen Vorrichtung;
- Fig. 3: eine Seitenansicht der ersten Ausführungsform gemäß Fig. 2;
- Fig. 4: eine Vorderansicht der ersten Ausführungsform gemäß Fig. 2 und 3;
- Fig. 5: eine Perspektivansicht einer zweiten Ausführungsform gemäß der Erfindung;
- Fig. 6: eine Seitenansicht der zweiten Ausführungsform gemäß Fig. 5;
- Fig. 7: ein Mollier-h,x-Diagramm für feuchte Luft mit den thermodynamischen Zustandsänderungen bei der ersten Ausführungsform;
- Fig. 8: ein Mollier-h,x-Diagramm für feuchte Luft mit den thermodynamischen Zustandsänderungen bei der zweiten Ausführungsform; und
- Fig. 9: ein Anwendungsbeispiel zur Klimatisierung von Gebäuden mit Verwendung der erfindungsgemäßen Vorrichtung.

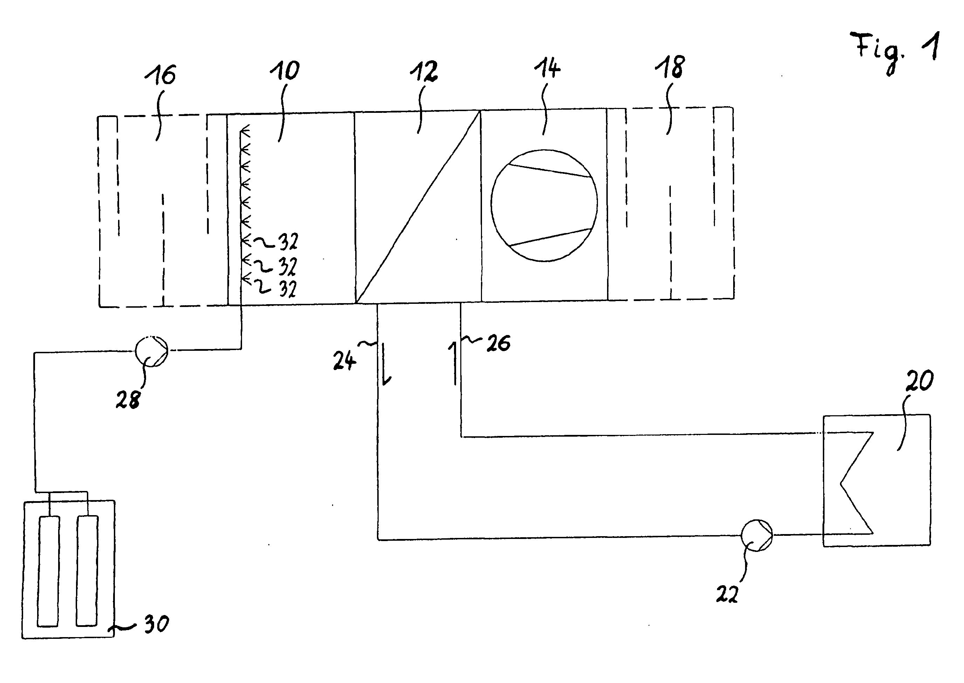

In Fig. 1 ist ein Blockschaltbild einer ersten Ausführungsform einer Vorrichtung zur Rückkühlung von Kühlmitteln oder Rückkühlmedien oder zur Kältegewinnung aus einem Luftstrom dargestellt. Die wesentlichen Baukomponenten der Vorrichtung sind ein Druckwasserbefeuchier 10, ein Wärmetauscher 12 und eine Gebläseeinrichtung 14. Der Wärmetauscher 12 ist dem Druckwasserbefeuchter 10 nachgeschaltet. Die Gebläseeinrichtung 14 ist wiederum dem Wärmetauscher 12 nachgeschaltet. Der Luftstrom bewegt sich von Druckwasserbefeuchter 10 über den Wärmetauscher 12 zur Gebläseeinrichtung 14. Der Luftstrom wird somit von der Gebläseeinrichtung 14 mittels einer Saugwirkung erzeugt. Dem Druckwasserbefeuchter 10 ist ein erster Schalldämpfer 16 vorgeschaltet. Der Gebläseeinrichtung 14 ist ein zweiter Schalldämpfer 18 nachgeschaltet.

Der Druckwasserbefeuchter 10 umfasst eine Mehrzahl Düsen 32, die innerhalb des Luftstroms angeordnet sind. Den Düsen 32 ist eine Hochdruckpumpe 28 vorgeschaltet. Der Hochdruckpumpe 28 ist wiederum eine Wasseraufbereitungsanlage 30 vorgeschaltet.

Der Wärmetauscher 12 ist mit einem Kühlmittelkreislauf gekoppelt. Neben dem Wärmetauscher 12 umfasst der Kühlmittelkreislauf einen Rücklauf 24, eine Kühlmittelpumpe 22, eine Kältemaschine 20 und einen Vorlauf 26.

Die Wasseraufbereitungsanlage 30 ist vorzugsweise als Umkehrosmose-Anlage ausgebildet. Dies hat den Vorteil, dass das zugeführte Wasser weitgehend frei von Kalk und Salzen ist, wodurch die Wartungsintervalle für die gesamte Anlage verlängert werden. Mittels der Hochdruckpumpe 28 wird das Wasser von der Wasseraufbereitungsanlage 30 der Luftbefeuchtungseinrichtung 10 zugeführt. Da das Wasser mit einem Druck beaufschlagt ist und die Düsen 32 einen verhältnismäßig geringen Durchmesser aufweisen, wird das Wasser in Form sehr kleiner Tröpfchen dem Luftstrom zugeführt. Es wird somit ein Sprühnebel im Luftstrom erzeugt. Die Oberfläche dieses Sprühnebels ist im Verhältnis zu seinem Volumen sehr groß. Dies hat zur Folge, dass die Wassertröpfchen im Wärmetauscher 12 sehr schnell und nahezu vollständig verdunsten. Der Wärmetauscher 12 bewirkt eine thermische Wechselwirkung zwischen dem Luftstrom und dem Kühlmittelkreislauf. In dem Kühlmittelkreislauf befindet sich ein geeignetes flüssiges Kühlmittel. Da bei der Verdunstung der Wassertröpfchen im Wärmetauscher 12 aufgrund der Verdunstungsenthalpie zusätzliche Wärmeenergie benötigt wird, wird diese im Wärmetauscher 12 dem Kühlmittel entzogen. Die Temperaturdifferenz des Kühlmittels zwischen dem Vorlauf 26 und dem Rücklauf 24 ist somit wesentlich höher als bei einem unbefeuchteten Luftstrom. Im Rücklauf 24 wird das Kühlmittel durch die Kältepumpe 22 der Kältemaschine 20 zugeführt. Bei der Kältemaschine 20 handelt es sich im Prinzip um einen Wärmetauscher, der zwischen dem Kühlmittelkreislauf und einer Kühlanlage, beispielsweise einer Klimaanlage, wechselwirkt. In der Kältemaschine 20 wird die Temperatur des Kühlmittels wieder erhöht. Über den Vorlauf 26 wird das Kühlmittel wieder dem Wärmetauscher 12 zugeführt.

Die Luftbefeuchtungseinrichtung 10, der Wärmetauscher 12 und die Gebläseeinrichtung 14 befinden sich in einem geschlossenen Kanal, so dass die Gebläseeinrichtung 14 eine Sogwirkung erzeugt. Dies ist strömungstechnisch besonders vorteilhaft. Der Kanal ist sowohl senkrecht als auch waagerecht funktionsfähig. Die Vorrichtung kann somit auf einfache Weise den architektonischen Gegebenheiten angepasst werden. Die Schalldämpfer 16 und 18 sind vorteilhaft, aber nicht unbedingt erforderlich. Da die Wassertröpfchen im Wärmetauscher 12 praktisch vollständig verdunsten, erzeugt die Vorrichtung nahezu kein Abwasser. Es wird lediglich Luft an die Umgebung abgegeben. Als Zuluft für den ersten Schalldämpfer 16 bzw. den Druckwasserbefeuchter 10 kann die Abluft eines klimatisierten Gebäudes oder auch die Umgebungsluft verwendet werden. Die Geschwindigkeit des Luftstroms beträgt zwischen 0,5 m/s und 5 m/s. Der von der Hochdruckpumpe 28 erzeugt Wasserdruck ist regelbar und beträgt zwischen 0 und 200 bar. Die aus dem Druckwasserbefeuchter 10, dem Wärmetauscher 12 und der Gebläseeinrichtung 14 bestehende Baugruppe hat eine Gesamtlänge von etwa 1 m.

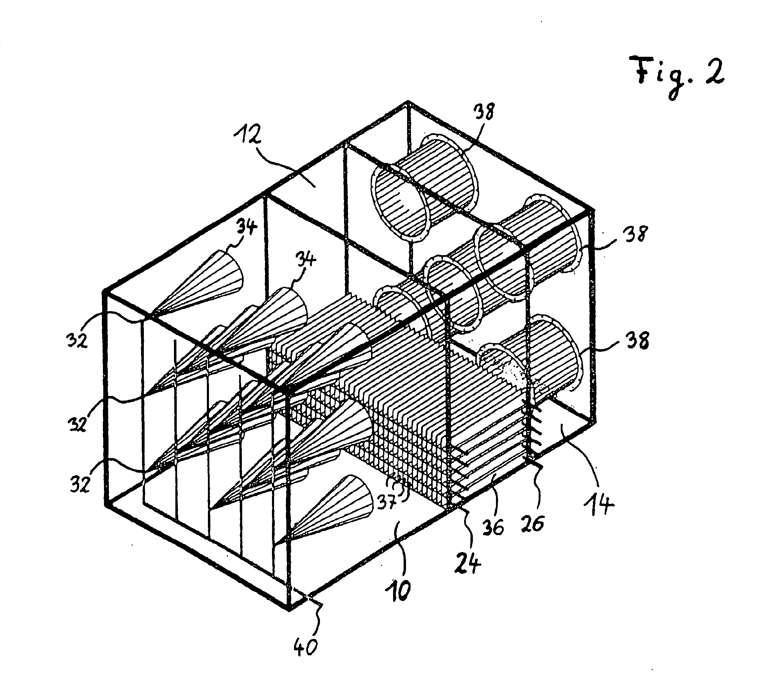

Fig. 2 zeigt eine Perspektivansicht einer Baugruppe, die aus dem Druckwasserbefeuchter 10, dem Wärmetauscher 12 und der Gebläseeinrichtung 14 besteht. Der Druckwasserbefeuchter 10 umfasst eine Vielzahl von Düsen 32, die alle in einer Ebene liegen. Die Ebene der Vielzahl der Düsen 32 liegt senkrecht zur Richtung des Luftstroms. Über eine Zuleitung 40 wird den Düsen 32 Druckwasser zugeführt. Von den Düsen 32 aus werden die Wassertröpfchen in Richtung des Luftstromes versprüht. Die Düsen 32 sind derart ausgebildet, dass die Wassertröpfchen jeweils in Form eines Kegels 34 versprüht werden. Auf diese Weise wird der Luftstrom gleichmäßig über einen gesamten Querschnitt befeuchtet. Dem Druckwasserbefeuchter 10 ist der Wärmetauscher 12 nachgeschaltet. Der Wärmetauscher 12 umfasst eine Vielzahl Module 36, die jeweils einen Vorlauf 26 und einen Rücklauf 24 aufweisen. Jedes Modul 36 umfasst eine Vielzahl langgestreckter Lamellen 37. Die Ebene der Lamellen 37 liegt parallel zur Richtung des Luftstroms. Durch die geometrische Anordnung der Module 36 und der Lamellen 37 ist der Strömungswiderstand für den Luftstrom innerhalb des Wärmetauschers 12 verhältnismäßig gering. Aufgrund der hohen Anzahl der Lamellen 37 und deren großer Oberfläche lässt sich ein verhältnismäßig hoher Wärmeaustauschgrad erzielen. Durch die modulare Bauweise des Wärmetauschers 12 lässt sich die Anzahl der Module 36 variieren. Der Wärmetauscher 12 lässt sich somit für unterschiedliche Wärmeübertragungsarten präparieren. Der in Fig. 2 dargestellte Wärmetauscher 12 weist über seinen gesamten Querschnitt eine Mehrzahl von Modulen 36 auf. In Fig. 2 sind lediglich sechs Module, 36 dargestellt, um den inneren Aufbau zu verdeutlichen.

Dem Wärmetauscher 12 ist die Gebläseeinrichtung 14 nachgeschaltet. Die Gebläseeinrichtung 14 umfasst fünf parallel geschaltete Ventilatoren 38. Da der Druckwasserbefeuchter 10, der Wärmetauscher 12 und die Gebläseeinrichtung 14 nacheinander in einem geschlossenen Kanal angeordnet sind, arbeiten die fünf Ventilatoren 38 als Saugventilatoren. Diese Sogwirkung ist thermodynamisch besonders günstig. Die Ventilatoren 38 sind separat ansteuerbar, so dass die Luftgeschwindigkeit unterschiedlich einstellbar ist. Beispielsweise kann im Zentrum des Kanals die Luftgeschwindigkeit anders eingestellt werden als in den Randbereichen des Luftkanals. Damit besteht die Möglichkeit, die Geschwindigkeitsverteilung innerhalb des Kanals so zu korrigieren, dass die Strömung der Luft möglichst laminar wird. Da die Gebläseeinrichtung 14 mehrere Ventilatoren 38 aufweist, können die Ventilatoren 38 einzeln gewartet werden, ohne dass die gesamte Anlage abgeschaltet werden muss. Bei Ausfall oder Defekt eines Ventilators 38 muss also lediglich der relevante Ventilator 38 repariert oder ausgetauscht werden, während die übrigen Bestandteile der Gebläseeinrichtung 14 in der Anlage verbleiben können.

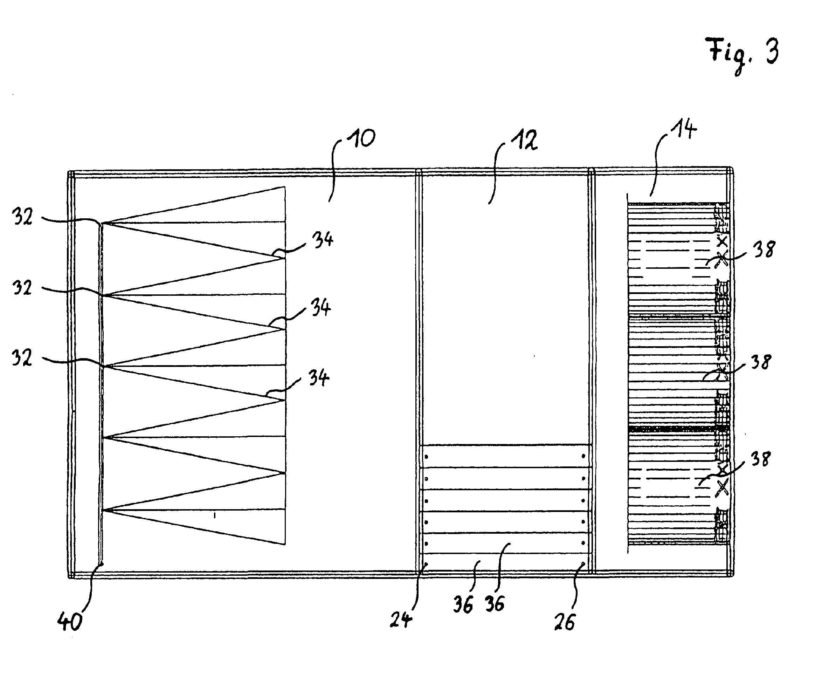

Fig. 3 zeigt eine Seitenansicht der Vorrichtung gemäß Fig. 2. Der Druckwasserbefeuchter 10 weist eine meist noch höhere Anzahl von matrixförmig angeordneten Düsen 32, als in der rein schematischen Figur 3 erkennbar, auf. Über den Zulauf 40 wird das Druckwasser zugeführt. Die Sprühkegel 34 haben vorzugsweise einen Winkel zwischen 30° und 90°. Zur Erhöhung der Effektivität können im Luftkanal Mittel zur Verwirbelung der Luft vorgesehen sein. Der Wärmetauscher 12 umfasst eine Vielzahl von Modulen 36. In der Zeichnung gemäß Fig. 3 sind lediglich sechs Module dargestellt, während der Wärmetauscher 12 die Module 36 tatsächlich über seinen gesamten Querschnitt aufweist. Jedes Modul verfügt über einen eigenen Vorlauf 26 und einen Rücklauf 24. In der Gebläseeinrichtung 14 sind fünf parallele Ventilatoren 38 angeordnet.

Fig. 3 verdeutlicht die Anordnung der Ventilatoren 38. Durch diese Anordnung lässt sich die Bildung von Turbulenzen im Luftkanal weitgehend verhindern, was sich für die Energiebilanz der gesamten Anlage günstig auswirkt.

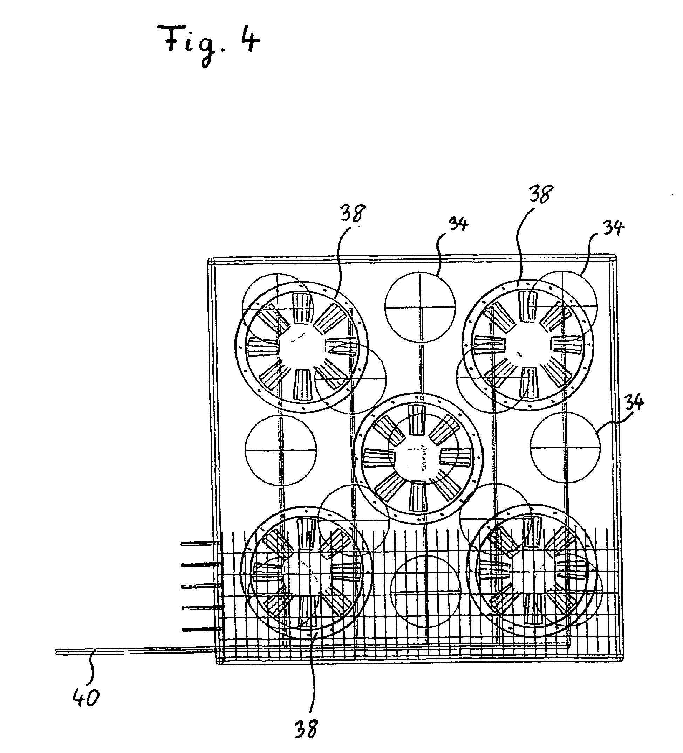

Fig. 4 zeigt eine Vorderansicht der Vorrichtung gemäß Fig. 2 und 3. Diese Darstellung verdeutlicht, dass durch die Verteilung der Düsen 32 und die geometrische Ausbildung der Sprühkegel 34 der gesamte Querschnitt des Luftkanals erfasst wird. Weiterhin sind in der Gebläseeinrichtung 14 die Ventilatoren 38 so verteilt, dass über den gesamten Querschnitt des Luftkanals die Sogwirkung erreicht wird.

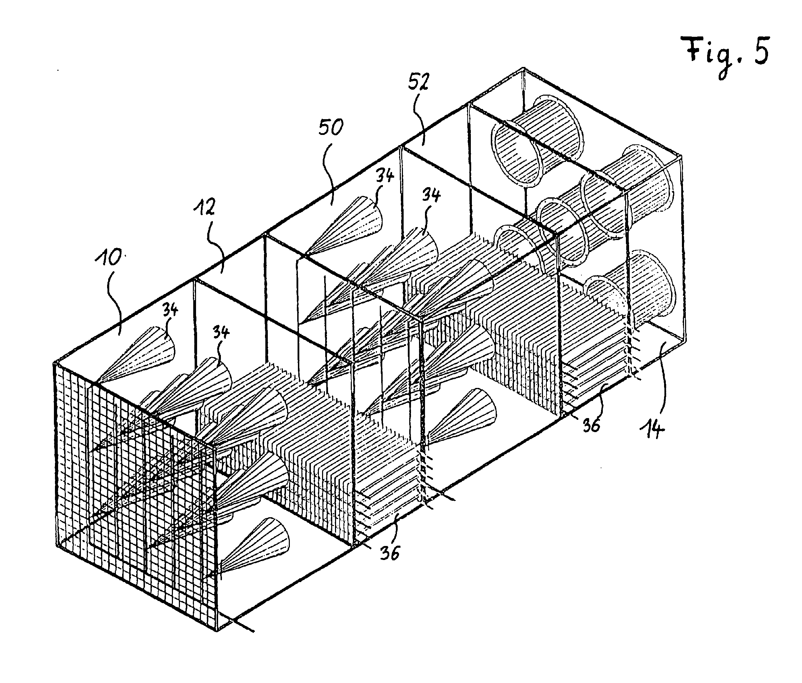

Fig. 5 zeigt eine zweite Ausführungsform der erfindungsgemäßen Vorrichtung. Die zweite Ausführungsform unterscheidet sich von der ersten Ausführungsform dadurch, dass sie neben dem Druckwasserbefeuchter 10 und dem Wärmetauscher 12 zusätzlich einen weiteren Druckwasserbefeuchter 50 und einen weiteren Wärmetauscher 52 aufweist. Der Druckwasserbefeuchter 10, der Wärmetauscher 12, der weitere Druckwasserbefeuchter 50, der weitere Wärmetauscher 52 und die Gebläseeinrichtung 14 sind in dieser Reihenfolge seriell geschaltet. Mit der zweiten Ausführungsform lässt sich gegenüber der ersten Ausführungsform die Kälterückgewinnung noch weiter erhöhen. In der Zeichnung sind bei den Wärmetauschern 12 und 52 aus darstellungstechnischen Gründen jeweils sechs Module 36 dargestellt, während tatsächlich die beiden Wärmetauscher 12 und 52 über den gesamten Querschnitt mit Modulen 36 bestückt sind. Da sich die Gebläseeinrichtung 14 am Ende des Luftkanals befindet, wird im gesamten Luftkanal eine Sogwirkung erzeugt.

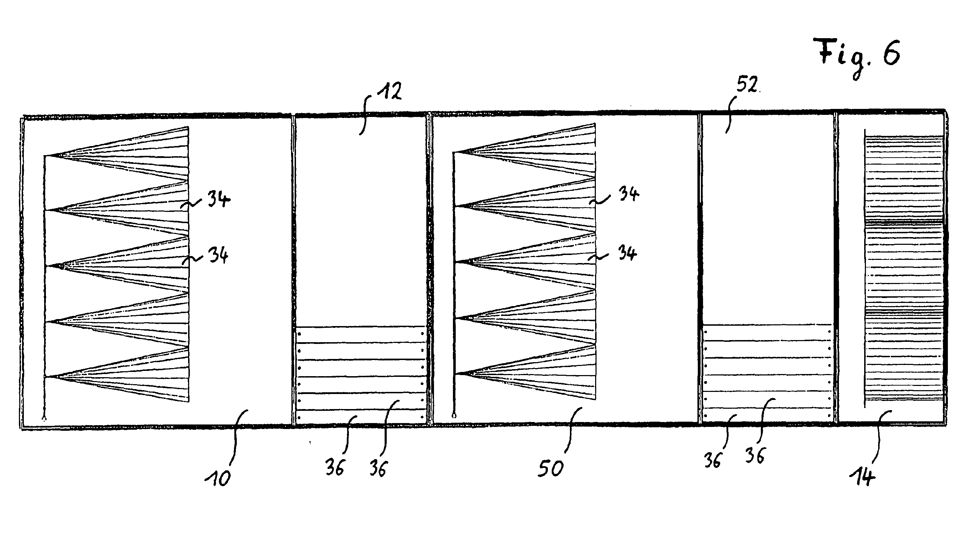

Fig. 6 zeigt eine Seitenansicht der Vorrichtung gemäß Fig. 5. In Betrieb werden die nachfolgend genannten thermodynamischen Zustandsänderungen durchgeführt. Im Druckwasserbefeuchter 10 wird die Feuchtigkeit der angesaugten Luft auf annähernd 100% erhöht. Die Temperatur des Luftstroms wird gleichzeitig reduziert, da die für die Verdunstung notwendige Energie dem Luftstrom entzogen wird. Anschließend wird im Wärmetauscher 12 die Temperatur des Luftstroms wieder erhöht, abhängig von der Temperatur des Kühlmittels. Die Erwärmung wird dadurch bewirkt, dass die Temperatur des Kühlmittels im Kühlmittelkreislauf stets höher ist als die Temperatur der feuchtigkeitsgesättigten Luft. Außerdem wird die Verdunstungsenthalpie der Wassertröpfchen im Sprühnebel genutzt. Die Vorgänge im Druckwasserbefeuchter 10 und im Wärmetauscher 12 wiederholen sich anschließend im Druckwasserbefeuchter 50 und im Wärmetauscher 52. Das auf diese Weise abgekühlte Kühlmittel im Kühlmittelkreislauf wird vorzugsweise für die Abkühlung einer Zuluft in einer Klimatisierungsanlage oder zur Rückkühlung eines Kühlmittels in einer anderen Kältemaschine verwendet.

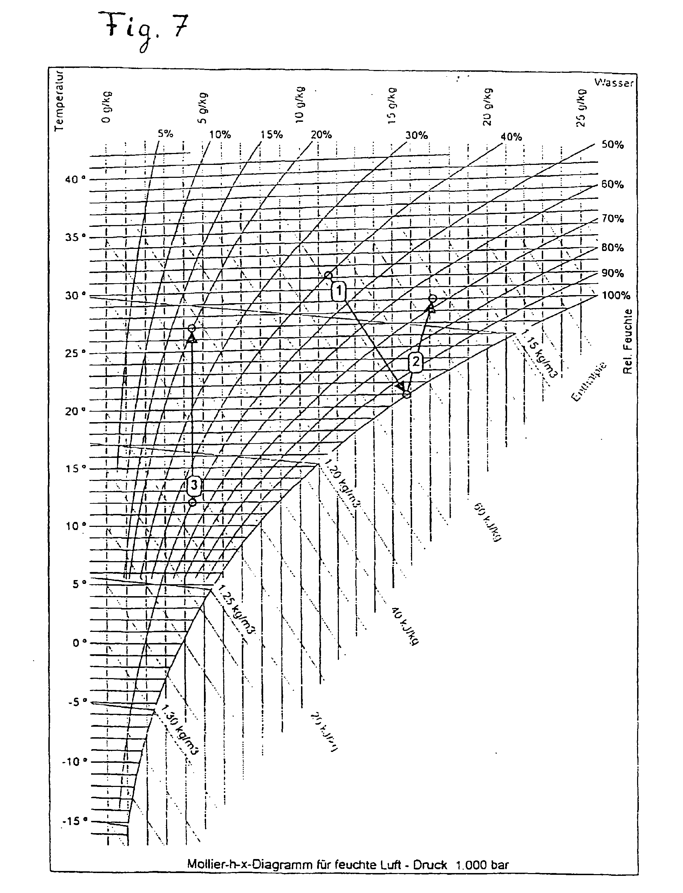

Fig. 7 zeigt ein Mollier-h,x-Diagramm für feuchte Luft mit den thermodynamischen Zustandsänderungen bei der ersten Ausführungsform. In dem Mollier-h,x-Diagramm sind die relevanten thermodynamischen Zustandsgrößen, wie Temperatur, relative Feuchtigkeit und Enthalpie graphisch dargestellt.

Pfeil 1 zeigt die thermodynamische Zustandsänderung des Luftstroms während des Befeuchtens im Druckwasserbefeuchter 10. Ursprünglich hat der Luftstrom eine Temperatur von 31°C und eine relative Feuchtigkeit von 40%. Alternativ kann diese Luft auch aus der Umgebung entnommen werden. Dies hängt insbesondere von den allgemeinen klimatischen Bedingungen, den konkreten Vilitterungsverhältnissen und dem Bedarf an rückgewonnener Kälte ab. Der Befeuchtungsvorgang erfolgt mit einem Wasser, dessen Temperatur in etwa der des Leitungswassers entspricht. Durch das Befeuchten wird die Temperatur des Luftstroms auf 21,5°C abgesenkt. Gleichzeitig wird durch das Befeuchten die relative Feuchtigkeit des Luftstroms auf 100% erhöht und übersättigt. Der Luftstrom kann eine bestimmte Menge Wasser bis zum Sättigungszustand aufnehmen.

Im nachfolgenden Wärmetauscher 12 erwärmt sich die Luft und kann anschließend wieder Wasser aufnehmen. Da mehr Wasser in den Luftstrom eingesprüht wurde, als dieser anfangs aufnehmen kann, verdunstet das überschüssige Wasser im Wärmetauscher 12 und entzieht dem Kühlmittel innerhalb des Wärmetauschers 12 die dazu notwendige Energie. Die dem Wasser entzogene Energie entspricht der Verdunstungsenergie der Wassertröpfchen. Die Menge des im Wärmetauscher 12 verdunsteten Wassers hängt von der Eintrittstemperatur des Kühlmittels in den Wärmetauscher 12 ab.

Pfeil 2 zeigt die thermodynamische Zustandsänderung des Luftstroms im Wärmetauscher 12. Durch Wärmeaustausch mit dem Wärmetauscher 12 unter gleichzeitiger Verdunstung der Wassertröpfchen wird die relative Feuchtigkeit des Luftstroms auf etwa 67% reduziert. Bei diesem Verdunstungsvorgang wird die spezifische Enthalpie der Luft um etwa 12 kJ/kg erhöht. Diese erforderliche Verdunstungsenthalpie wird im Wärmetauscher 12 dem Kühlmittelkreislauf in Form von Wärmeenergie entzogen. Die Temperatur des Kühlmittels wird auf diese Weise herabgesetzt. Das Kühlmittel kann anschließend für die Abkühlung der Zuluft des klimatisierten Gebäudes oder zur Rückkühlung eines Kühlmittels oder für andere Kühlzwecke verwendet werden. Außerdem wird die Temperatur des Luftstroms im Wärmetauscher 12 auf 29°C erhöht. Über die Gebläseeinrichtung 14 wird der Luftstrom der Umgebung zugeführt.

Bei den Verfahrensschritten gemäß Pfeil 1 und Pfeil 2 wird eine Energie verwendet, die durch die Verdunstung des Wassers nutzbar gemacht wird. Diese Energie wird auch latente (versteckte) Energie genannt. Im Wärmetauscher 12 wird aber auch die fühlbare Energie der Luft genutzt, d.h. derjenige Energieanteil, der von der Temperatur abhängt. Nach der adiabatischen Kühlung hat die Luft eine Temperatur von 21,5°C, strömt anschließend durch den Wärmetauscher 12 und erwärmt sich dabei um mehrere °C. Die Energie bei dieser Erwärmung beträgt 0,336 Wh pro °C und pro m³ vorbeiströmender Luft.

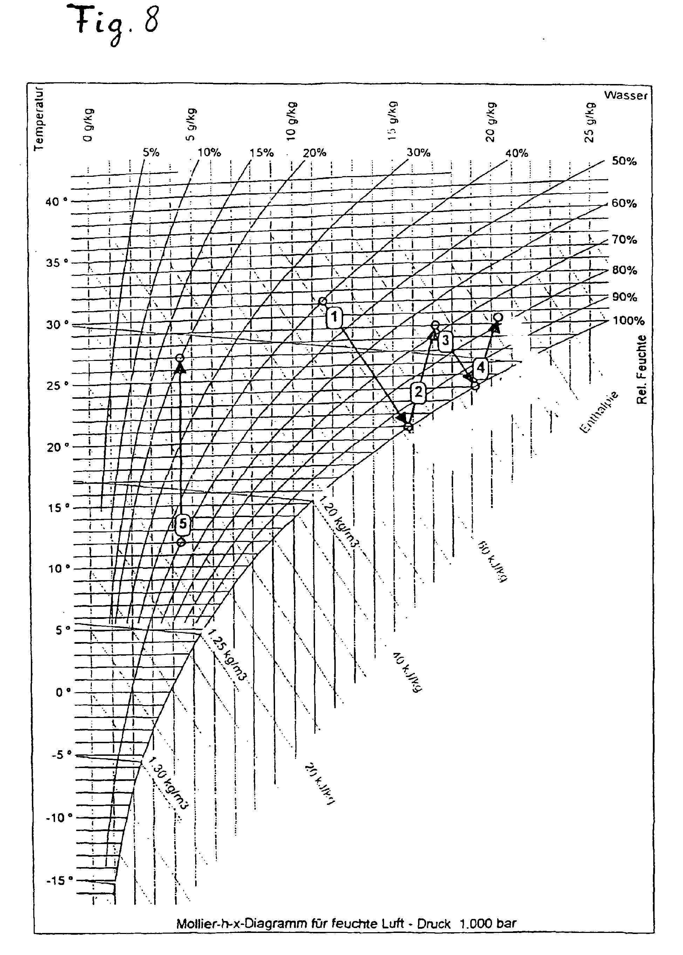

Fig. 8 zeigt ein Mollier-h,x-Diagramm für feuchte Luft mit den thermodynamischen Zustandsänderungen bei der zweiten Ausführungsform. Da die zweite Ausführungsform zwei Stufen aufweist, werden sowohl der Befeuchtungsvorgang mit Abkühlung als auch die Erwärmung mit Verdunstung im Luftstrom wiederholt. Auch bei der zweiten Ausführungsform beträgt die Anfangstemperatur des Luftstroms 31°C. Die anfangliche Luftfeuchtigkeit beträgt ebenfalls 40%. Die thermodynamischen Zustandsänderungen gemäß den Pfeilen 1 und 2 sind mit denjenigen Zustandsänderungen gemäß den Pfeilen 1 und 2 in Fig. 7 identisch. Während der Luftstrom nach dem ersten Verdunstungsvorgang beim ersten Ausführungsbeispicl an die Umgebung abgegeben wird, erfolgt hier eine weitere Befeuchtung im Druckwasserbefeuchter 50. Die entsprechende thermodynamische Zustandsänderung wird durch Pfeil 3 dargestellt. Die Temperatur des Luftstroms wird von 29°C auf 24°C herabgesetzt. Die relative Feuchtigkeit wird im zweiten Druckwasserbefeuchter 50 von etwa 67% auf nahezu 100% erhöht. Auch in diesem Stadium befindet sich der Luftstrom in einem Zustand, in dem er keine weitere Feuchtigkeit mehr aufnehmen kann. Im Wärmetauscher 52 verdunstet ein wesentlicher Teil der Feuchtigkeit, so dass am Ausgang des Wärmetauschers 52 die relative Feuchtigkeit des Luftstroms etwa 78% beträgt. Die Temperatur des Luftstroms wird im Wärmetauscher 52 von 24°C auf etwa 30°C erhöht. Dies setzt selbstverständlich voraus, dass die Temperatur des Kühlmittels im Vorlauf des Wärmetauschers 52 höher sein muss als die Endtemperatur des Luftstroms im Wärmetauscher 52. Das Kühlmittel im Kühlmittelkreislauf wird im Wärmetauscher 52 entsprechend abgekühlt und kann in einem weiteren Wärmetauscher zur Abkühlung der Zuluft für ein klimatisiertes Gebäude verwendet werden.

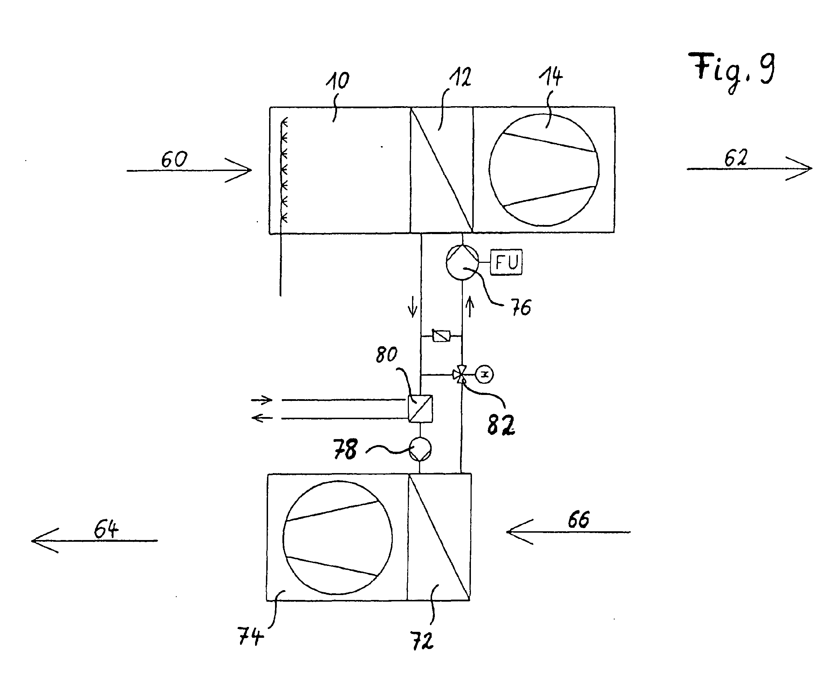

In Fig. 9 ist ein Blockschaltbild einer Klimaanlage für Gebäude dargestellt, das die erste Ausführungsform der erfindungsgemäßen Vorrichtung zur Kälterückgewinnung als wesentliche Komponente aufweist. Die Klimaanlage umfasst zwei Luftkanäle, nämlich einen Abluftkanal und einen Zuluftkanal. Im Abluftkanal befindet sich die Vorrichtung gemäß der ersten Ausführungsform. Die Vorrichtung besteht aus dem Druckwasserbefeuchter 10, dem Wärmetauscher 12 und der Gebläseeinrichtung 14. Im Zuluftkanal befindet sich ein Zuluftwärmetauscher 72 und ein Zuluftgebläse 74. Der Wärmetauscher 12 und der Zuluftwärmetauscher 72 sind über den Kühlmittelkreislauf miteinander gekoppelt. Der Zuluftwärmetauscher 72 sorgt für eine Wechselwirkung zwischen dem Zuluftkanal und dem Kühlmittelkreislauf. Weiterhin weist der Kühlmittelkreislauf zwei Kühlmittelpumpen 76 und 78, einen variablen Wärmetauscher 80 zum Heizen oder Kühlen sowie ein Regelventil 82 auf. Am Eingang des Abluftkanals wird Raumabluft 60 angesaugt, die typischerweise eine Temperatur von 26°C und eine relative Feuchtigkeit von etwa 47% aufweist. Im Druckwasserbefeuchter 10 wird die Raumabluft mittels der Düsen 32 befeuchtet, so dass deren relative Feuchtigkeit annähernd 100% beträgt. Die Raumabluft wird dabei auf etwa 20°C abgekühlt. Im Wärmetauscher 12 verdunstet ein Teil des eingedüsten Wassers und die Lufttemperatur steigt, so dass die relative Feuchtigkeit des Luftstroms auf etwa 67% herabgesetzt wird. Gleichzeitig wird die Temperatur des Luftstroms auf etwa 25°C erhöht. Aufgrund der Verdunstungsenthalpie der Wassertröpfchen im Luftstrom wird dem Kühlmittelkreislauf verhältnismäßig viel Wärme entzogen. Auf diese Weise wird das Kühlmittel im Kühlmittelkreislauf deutlich abgekühlt. Der erwärmte Luftstrom wird als Forduft 62 an die Umgebung abgegeben. Die beiden Kühlmittelpumpen 76 und 78 im Kühlmittelkreislauf sind zur Beförderung des Kühlmittels vorgesehen. Der variable Wärmetauscher 80 und das Regelventil 82 ermöglichen eine Korrektur der Temperatur des Kühlmittels im Kühlmittelkreislauf. Auf diese Weise kann die Kühlmitteltemperatur im Kühlmittelkreislauf unabhängig von den genauen Temperaturen der Raumabluft 60, der Fortluft 62, der Außenluft 66 und der Zuluft 64 eingestellt werden. Über den variablen Wärmetauscher 80 kann die Temperatur des Kühlmittels sowohl erhöht als auch herabgesetzt werden, je nach Bedarf.

Das abgekühlte Kühlmittel kann dazu genutzt werden, um den Luftstrom im zweiten Luftkanal abzukühlen. Im zweiten Luftkanal wird Außenluft 66 aus der Umgebung angesaugt. Typische Werte für die Außenluft 66 sind eine Temperatur von 29°C und 44% relative Feuchtigkeit. Im Zuluftwärmetauscher 72 wird die Außenluft auf etwa 20°C abgekühlt, wobei sich deren relative Feuchtigkeit auf etwa 70% erhöht. Durch das weitere Gebläse 74 wird die abgekühlte Außenluft als Zuluft dem klimatisierten Gebäude zugeführt.

Die Hochdruckpumpe 28 ist regelbar. Insbesondere ist es sinnvoll, mittels des Druckwasserbefeuchters 10 umso mehr Wasser einzusprühen, je höher die Temperatur der Raumabluft 60 ist. Liegt die Temperatur der Raumabluft 60 oder der Umgebungsluft, die an deren Stelle verwendet wird, unter 20°C, ist die Befeuchtung mit Druckwasser nicht unbedingt erforderlich. Es wird daher als vorteilhaft empfunden, das Einspritzen von Wasser erst zu beginnen, wenn die Kühlleistung des unbefeuchteten Luftstroms nicht mehr ausreicht. Ferner ist die Hochdruckpumpe 28 vorzugsweise stufenlos regulierbar, so dass die Intensität der Luftbefeuchtung beliebig einstellbar ist. Die Anlage hat den Vorteil, dass nahezu kein Abwasser anfällt. Ebenso sind keine Chemikalien weder im Betrieb noch zu Reinigungszwecken erforderlich, was aus Gründen des Umweltschutzes vorteilhaft ist. Da vorzugsweise entsalztes Wasser eingesetzt und das eingebrachte Wasser dosiert ausgeregelt auf den Kühlbedarf nahezu abwasserfrei eingedüst wird, wird der Reinigungs- und Wartungsaufwand gegenüber vorbekannten Vorrichtungen erheblich reduziert.

### Bezugszeichenliste

- 10: Druckwasserbefeuchter
- 12: Wärmetauscher
- 14: Gebläseeinrichtung
- 16: erster Schalldämpfer
- 18: zweiter Schalldämpfer
- 20: Kältemaschine
- 22: Kältepumpc
- 24: Rücklauf
- 26: Vorlauf
- 28: Hochdruckpumpe
- 30: Wasseraufbereitungsanlage
- 32: Düsen
- 34: Sprühkegel
- 36: Module
- 37: Lamellen
- 38: Ventilatoren
- 40: Zulauf

- 50: weiterer Druckwasserbefeuchter
- 52: zweiter Wärmetauscher

- 60: Raumabluft
- 62: Fortluft
- 64: Zuluft
- 66: Außenluft

- 72: Zuluftwärmetauscher
- 74: Zuluftgebläse
- 76, 78: Kühlmittetpumpen
- 80: variabler Wärmetauscher
- 82: Regelventil

## Patentansprüche

1. Vorrichtung zur Rückkühlung von Kühlmitteln oder Rückkühlmedien oder zur Kältegewinnung aus einem Luftstrom, welche aufweist
a) wenigstens eine Luftbefeuchtungseinrichtung (10) zur Befeuchtung des Luftstroms,
b) wenigstens einen Wärmetauscher (12), welcher der Luftbefeuchtungseinrichtung (10) nachgeschaltet ist und zwischen dem Luftstrom und einem Kühlmittelkreislauf wechselwirkt, und
c) eine Gebläseeinrichtung (14) zur Beförderung des Luftstroms,
**dadurch gekennzeichnet, dass**
d) die Luftbefeuchtungseinrichtung (10) eine Regelungseinrichtung zur Regulierung der Befeuchtung des Luftstroms aufweist, so dass im Wesentlichen kein Kondenswasser in der Vorrichtung verbleibt.

2. Vorrichtung nach Anspruch 1,
**dadurch gekennzeichnet, dass**
die Luftbefeuchtungseinrichtung (10), der Wärmetauscher (12) und die Gebläseeinrichtung (14) in einem Kanal angeordnet sind, wobei der Kanal eingangs- und ausgangsseitig offen und ansonsten geschlossen ist.

3. Vorrichtung nach Anspruch 1 oder 2,
**dadurch gekennzeichnet, dass**
die Gebläseeinrichtung (14) dem Wärmetauscher (12) nachgeschaltet ist.

4. Vorrichtung nach einem der Ansprüche 1 bis 3,
**dadurch gekennzeichnet, dass**
die Gebläseeinrichtung (14) eine Mehrzahl paralleler und/oder serieller Ventilatoren (38) aufweist.

5. Vorrichtung nach einem der Ansprüche 1 bis 4,
**dadurch gekennzeichnet, dass**
die Luftbefeuchtungseinrichtung (10) ein Druckwasserbefeuchter ist.

6. Vorrichtung nach Anspruch 5,
**dadurch gekennzeichnet, dass**
die Luftbefeuchtungseinrichtung (10) eine Vielzahl Düsen (32) aufweist, die im Luftstrom angeordnet sind.

7. Vorrichtung nach Anspruch 6,
**dadurch gekennzeichnet, dass**
die Vielzahl Düsen (32) derart in Richtung des Luftstroms gerichtet ist, dass ein Ausstoß im Wesentlichen in Richtung des Luftstroms erfolgt.

8. Vorrichtung nach einem der Ansprüche 5 bis 7,
**dadurch gekennzeichnet, dass**
der Druck, mit dem die Luftbefeuchtungseinrichtung (10) mit Befeuchtungsfluid beaufschlagt wird, kontinuierlich einstellbar, insbesondere regelbar ist.

9. Vorrichtung nach Anspruch 8,
**dadurch gekennzeichnet, dass**
der Druck, mit dem die Luftbefeuchtungseinrichtung (10) beaufschlagt wird, zwischen 0 bar und 200 bar einstellbar, insbesondere regelbar ist.

10. Vorrichtung nach einem der Ansprüche 1 bis 9,
**dadurch gekennzeichnet, dass**
die Wassermenge bei der Luftbefeuchtungseinrichtung (10) kontinuierlich einstellbar, insbesondere regelbar ist.

11. Vorrichtung nach einem der Ansprüche 1 bis 10,
**dadurch gekennzeichnet, dass**
die Luftbefeuchtungseinrichtung (10) eine Feinstvernebelung des Luftstroms bewirkt.

12. Vorrichtung nach Anspruch 11,
**dadurch gekennzeichnet, dass**
die Feinstvernebelung aus Tröpfchen besteht, wobei die Mehrzahl der Tröpfchen einen Durchmesser kleiner als 60 µm, vorzugsweise kleiner als 30 µm aufweist.

13. Vorrichtung nach einem der Ansprüche 1 bis 12,
**dadurch gekennzeichnet, dass**
der Luftbefeuchtungseinrichtung (10) ein Schalldämpfer (16) vorgeschaltet ist.

14. Vorrichtung nach einem der Ansprüche 1 bis 13,
**dadurch gekennzeichnet, dass**
der Gebläseeinrichtung (14) ein Schalldämpfer (18) nachgeschaltet ist.

15. Vorrichtung nach einem der Ansprüche 1 bis 14,
**dadurch gekennzeichnet, dass**
der Kühlmittelkreislauf ein flüssiges Kühlmittel aufweist.

16. Vorrichtung nach einem der Ansprüche 4 bis 15,
**dadurch gekennzeichnet, dass**
die Drehzahl der Ventilatoren (38) kontinuierlich einstellbar ist.

17. Vorrichtung nach Anspruch 16,
**dadurch gekennzeichnet, dass**
die Vorrichtung durch die Einstellung der Drehzahl der Ventilatoren (38) und des Drucks in der Luftbefeuchtungseinrichtung (10) regelbar ist.

18. Verfahren zur Rückkühlung von Kühlmitteln oder Rückkühlmedien oder zur Kälterückgewinnung aus einem Luftstrom, welches folgende Schritte aufweist:
a) Bereitstellen eines Luftstroms aus einer Abluft eines klimatisierten Gebäudes oder aus der Umgebungsluft,
b) Befeuchten des Luftstroms durch Zugabe von feinst vernebeltem Sprühwasser,
c) Erwärmen des Luftstroms bei Erhöhung der absoluten Feuchtigkeit und gleichzeitiger Herabsetzung der relativen Feuchtigkeit, wobei die erforderliche Energie aus einem Kühlmittelkreislauf entnommen wird, und
d) Abführen des Luftstroms an die Umgebung,
**dadurch gekennzeichnet, dass**
e) das Befeuchten des Luftstroms derart reguliert und geführt wird, so dass im Wesentlichen kein Niederschlag entsteht.

19. Verfahren nach Anspruch 18,
**dadurch gekennzeichnet, dass**
das Verfahren mit einer Vorrichtung nach einem der Ansprüche 1 bis 17 durchgeführt wird.

20. Verfahren nach Anspruch 18 oder 19,
**dadurch gekennzeichnet, dass**
die beiden Verfahrensschritte Befeuchten und Erwärmen des Luftstroms wenigstens einmal wiederholt werden.

21. Verfahren nach einem der Ansprüche 18 bis 20,
**dadurch gekennzeichnet, dass**
das Befeuchten des Luftstroms mit Druckwasser erfolgt, wobei der Druck 0 bar bis 200 bar, vorzugsweise 20 bis 120 bar, weiter vorzugsweise 80 bar beträgt.

22. Verfahren nach einem der Ansprüche 18 bis 21,
**dadurch gekennzeichnet, dass**
die Menge und die Geschwindigkeit des Luftstroms durch kontinuierliches Einstellen der Drehzahlen von Ventilatoren geregelt wird.

23. Verfahren nach Anspruch 21 und 22,
**dadurch gekennzeichnet, dass**
die Rückkühlung bzw. Kältegewinnung sowohl durch Einstellen des Drucks und/oder der Ausbringungsmenge des Druckwassers als auch durch Einstellen der Drehzahlen der Ventilatoren geregelt wird.

## Revendications

1. Dispositif pour la réfrigération de retour de réfrigérants ou de fluides de refroidissement de retour ou pour l'obtention de froid à partir d'un flux d'air, qui présente
a) au moins un dispositif d'humidification d'air (10) pour l'humidification du flux d'air,
b) au moins un échangeur de chaleur (12), en aval duquel est monté le dispositif d'humidification d'air (10) et lequel interagit entre le flux d'air et un circuit de refroidissement, et
c) un dispositif de soufflerie (14) pour le transport du flux d'air,
**caractérisé en ce que**
d) le dispositif d'humidification d'air (10) présente un dispositif de réglage pour la régulation de l'humidification du flux d'air de telle sorte qu'il ne reste sensiblement pas d'eau de condensation dans le dispositif.

2. Dispositif selon la revendication 1, **caractérisé en ce que**
le dispositif d'humidification d'air (10), l'échangeur de chaleur (12) et le dispositif de soufflerie (14) sont disposés dans un canal, le canal étant ouvert côté entrée et côté sortie et fermé par ailleurs.

3. Dispositif selon la revendication 1 ou 2,
**caractérisé en ce que**
le dispositif de soufflerie (14) est monté en aval de l'échangeur de chaleur (12).

4. Dispositif selon l'une quelconque des revendications 1 à 3,
**caractérisé en ce que**
le dispositif de soufflerie (14) présente une pluralité de ventilateurs (38) montés en parallèle et/ou en série.

5. Dispositif selon l'une quelconque des revendications 1 à 4,
**caractérisé en ce que**
le dispositif d'humidification d'air (10) est un humidificateur à eau sous pression.

6. Dispositif selon la revendication 5,
**caractérisé en ce que**
le dispositif d'humidification d'air (10) présente une pluralité de buses (32) qui sont disposées dans le flux d'air.

7. Dispositif selon la revendication 6,
**caractérisé en ce que**
la pluralité de buses (32) est orientée dans le sens du flux d'air de telle sorte qu'une expulsion s'effectue principalement en direction du flux d'air.

8. Dispositif selon l'une quelconque des revendications 5 à 7,
**caractérisé en ce que**
la pression, avec laquelle le dispositif d'humidification d'air (10) est alimenté avec le fluide d'humidification, peut être ajustée, en particulier réglée, de façon continue.

9. Dispositif selon la revendication 8,
**caractérisé en ce que**
la pression, avec laquelle le dispositif d'humidification d'air (10) est alimenté, peut être ajustée, en particulier réglée, entre 0 bar et 200 bars.

10. Dispositif selon l'une quelconque des revendications 1 à 9,
**caractérisé en ce que**
la quantité d'air sur le dispositif d'humidification d'air (10) peut être ajustée, en particulier réglée de façon continue.

11. Dispositif selon l'une quelconque des revendications 1 à 10,
**caractérisé en ce que**
le dispositif d'humidification d'air (10) entraîne une vaporisation très fine du flux d'air.

12. Dispositif selon la revendication 11,
**caractérisé en ce que**
la vaporisation très fine consiste en des gouttelettes, la pluralité des gouttelettes présentant un diamètre inférieur à 60 µm, de préférence inférieur à 30 µm.

13. Dispositif selon l'une quelconque des revendications 1 à 12,
**caractérisé en ce que**
un amortisseur de bruit (16) est monté en amont du dispositif d'humidification d'air (10).

14. Dispositif selon l'une quelconque des revendications 1 à 13,
**caractérisé en ce que**
un amortisseur de bruit (18) est monté en aval du dispositif de soufflerie (14).

15. Dispositif selon l'une quelconque des revendications 1 à 14,
**caractérisé en ce que**
le circuit de refroisissement présente un réfrigérant liquide.

16. Dispositif selon l'une quelconque des revendications 4 à 15,
**caractérisé en ce que**
le régime des ventilateurs (38) est ajustable de façon continue.

17. Dispositif selon la revendication 16,
**caractérisé en ce que**
le dispositif peut être réglé par l'ajustage du régime des ventilateurs (38) et de la pression dans le dispositif d'humidification d'air (10).

18. Procédé pour le refroidissement de retour de réfrigérants ou de fluides de refroidissement de retour ou pour le recyclage de froid à partir d'un flux d'air, qui présente les étapes suivantes:
a) mise à disposition d'un flux d'air provenant d'une évacuation d'air d'un bâtiment climatisé ou de l'air ambiant,
b) humidification du flux d'air par addition d'eau pulvérisée, vaporisée de façon très fine,
c) réchauffement du flux d'air dans le cas d'augmentation de l'humidité absolue et d'abaissement simultané de l'humidité relative, l'énergie nécessaire étant prélevée d'un circuit de refroisissement, et
d) évacuation du flux d'air dans l'environnement,
**caractérisé en ce que**
e) l'humidification du flux d'air est régulée et guidée de telle sorte qu'il ne se forme dans l'ensemble aucun dépôt.

19. Procédé selon la revendication 18,
**caractérisé en ce que**
le procédé est effectué avec un dispositif conforme à l'une quelconque des revendications 1 à 17.

20. Procédé selon la revendication 18 ou 19,
**caractérisé en ce que**
les deux étapes du procédé humidification et réchauffement du flux d'air sont répétés au moins une fois.

21. Procédé selon l'une quelconque des revendications 18 à 20,
**caractérisé en ce que**
l'humidification du flux d'air s'effectue avec de l'eau sous pression, la pression va de 0 bar à 200 bars, de préférence de 20 à 120 bars, est également de préférence de 80 bars.

22. Procédé selon l'une quelconque des revendications 18 à 21,
**caractérisé en ce que**
la quantité et la vitesse du flux d'air sont réglées par un ajustage continu des régimes de ventilateurs.

23. Procédé selon les revendications 21 et 22,
**caractérisé en ce que**
le refroidissement de retour respectivement la production de froid sont réglés aussi bien par l'ajustage de la pression et/ou de la quantité évacuée de l'eau sous pression que par l'ajustage des régimes des ventilateurs.

## Claims

1. Device for recooling coolants or recooling media or for extracting cold from an air steam, which has
a) at least one air-humidifying device (10) for humidifying the air stream,
b) at least one heat exchanger (12), which is connected downstream of the air-humidifying device (10) and interacts between the air stream and a coolant circuit, and
c) a fan device (14) for advancing the air stream,
**characterised in that**
d) the air-humidifying device (10) has a regulating device for regulating the humidification of the air stream, so that essentially no condensation water remains in the device.

2. Device according to claim 1, **characterised in that** the air-humidifying device (10), the heat exchanger (12) and the fan device (14) are arranged in a channel, wherein the channel is open on the inlet and outlet side and otherwise closed.

3. Device according to claim 1 or 2, **characterised in that** the fan device (14) is connected downstream of the heat exchanger (12).

4. Device according to one of claims 1 to 3, **characterised in that** the fan device (14) has a plurality of parallel and/or serial ventilators (38).

5. Device according to one of claims 1 to 4, **characterised in that** the air-humidifying device (10) is a compressed-water humidifier.

6. Device according to claim 5, **characterised in that** the air-humidifying device (10) has a plurality of nozzles (32) which are arranged in the air stream.

7. Device according to claim 6, **characterised in that** the plurality of nozzles (32) is directed in the direction of the air stream such that expulsion takes place essentially in the direction of the air stream.

8. Device according to one of claims 5 to 7, **characterised in that** the pressure at which the air-humidifying device (10) is exposed to humidifying fluid, can be adjusted continuously, in particular can be regulated.

9. Device according to claim 8, **characterised in that** the pressure to which the air-humidifying device (10) is exposed, can be adjusted, in particular can be regulated, between 0 bar and 200 bar.

10. Device according to one of claims 1 to 9, **characterised in that** the quantity of water in the air-humidifying device (10) can be adjusted continuously, in particular can be regulated.

11. Device according to one of claims 1 to 10, **characterised in that** the air-humidifying device (10) effects very fine atomisation of the air stream.

12. Device according to claim 11, **characterised in that** the very fine atomisation consists of droplets, wherein the majority of droplets have a diameter less than 60 µm, preferably less than 30 µm.

13. Device according to one of claims 1 to 12, **characterised in that** a sound insulator (16) is connected upstream of the air-humidifying device (10).

14. Device according to one of claims 1 to 13, **characterised in that** a sound insulator (18) is connected downstream of the fan device (14).

15. Device according to one of claims 1 to 14, **characterised in that** the coolant circuit has a liquid coolant.

16. Device according to one of claims 4 to 15, **characterised in that** the speed of the ventilators (38) can be adjusted continuously.

17. Device according to claim 16, **characterised in that** the device can be regulated by adjusting the speed of the ventilators (38) and the pressure in the air-humidifying device (10).

18. Process for recooling coolants or recooling media or for extracting cold from an air stream, which has the following steps:
a) provision of an air stream from the waste air of an air-conditioned building or from the ambient air,
b) humidification of the air stream by addition of very finely atomised water spray,
c) heating the air stream when increasing the absolute humidity and simultaneously reducing the relative humidity, wherein the energy required is removed from a coolant circuit, and
d) discharging the air stream to the surroundings,
**characterised in that**
e) the humidification of the air stream is regulated and managed such that essentially no precipitate is produced.

19. Process according to claim 18, **characterised in that** the process is carried out using a device according to one of claims 1 to 17.

20. Process according to claim 18 or 19, **characterised in that** the two process steps humidification and heating of the air stream are repeated at least once.

21. Process according to one of claims 18 to 20, **characterised in that** the humidification of the air stream is effected using compressed water, wherein the pressure is 0 bar to 200 bar, preferably 20 to 120 bar, also preferably 80 bar.

22. Process according to one of claims 18 to 21, **characterised in that** the quantity and the speed of the air stream is regulated by continuous adjustment of the speeds of ventilators.

23. Process according to claim 21 and 22, **characterised in that** recooling or cold extraction is regulated both by adjusting the pressure and/or the output quantity of compressed water and by adjusting the speeds of the ventilators.
